# EUROPÄISCHE PATENTSCHRIFT

(11) **EP 3 576 977 B1**
(45) Veröffentlichungstag und Bekanntmachung des Hinweises auf die Patenterteilung: **09.06.2021**
(21) Anmeldenummer: 18704458.1
(22) Anmeldetag: 29.01.2018
(51) Int. Cl.: B60N 2/56, B60N 2/02, B60N 2/28, F16H 57/00, F16H 25/00

(54) **ELEKTRISCH VERSTELLBARER KINDERSITZ, INSBESONDERE ZUM BEFESTIGEN AUF EINEM KRAFTFAHRZEUGSITZ**
ELECTRICALLY ADJUSTABLE CHILD SEAT, IN PARTICULAR FOR FASTENING ON A MOTOR VEHICLE SEAT
SIÈGE ENFANT RÉGLABLE ÉLECTRIQUEMENT, DESTINÉ NOTAMMENT À ÊTRE FIXÉ SUR UN SIÈGE DE VÉHICULE À MOTEUR

(30) Priorität: 31.01.2017 DE 102017201531
(43) Veröffentlichungstag der Anmeldung: 11.12.2019
(73) Patentinhaber: Robert Bosch GmbH, 70442 Stuttgart (DE)
(72) Erfinder: KAESHAMMER, Miriam, 77836 Rheinmuenster (DE)
(86) Internationale Anmeldenummer: PCT/EP2018/052136
(87) Internationale Veröffentlichungsnummer: WO 2018/141689

(56) Entgegenhaltungen:
- WO-A1-2011/018341
- WO-A2-2009/141814
- US-A- 3 043 552
- US-A1- 2006 181 124

## Beschreibung

### Stand der Technik

Die vorliegende Erfindung betrifft einen elektrisch verstellbaren Kindersitz, insbesondere zum Befestigen auf einem Kraftfahrzeugsitz.

### Offenbarung der Erfindung

Aus dem Stand der Technik sind Kindersitze zur Verwendung im Kraftfahrzeug bekannt, bei denen eine Sitzschale manuell gegenüber einem Sitzrahmen verstellbar ist. Dabei weist der Kindersitz zwei oder mehrere Rastpositionen auf, in denen die Sitzschale eingerastet werden kann. Nachteilig bei einer solchen Ausführung ist, dass während der Fahrt im Kraftfahrzeug die Position der Sitzschale durch den Fahrer gar nicht, oder nur mit großem Sicherheitsrisiko manuell verstellbar ist. Dadurch ist der Fahrer gezwungen, gegebenenfalls einen Parkplatz anzufahren, um die Sitzschale beispielsweise sicher von einer Sitzposition in eine Schlafposition zu verstellen, wenn beispielsweise das Kleinkind während der Fahrt eingeschlafen ist. Des Weiteren besteht die Gefahr, dass durch das manuelle Verstellen der Sitzschale in eine andere Rastposition das Kind durch die Erschütterung der Sitzschale wieder aufwacht. Außerdem wäre es erstrebenswert, dem Kind eine Einschlafhilfe zur Verfügung zu stellen, damit es auf längeren Fahrten nicht unnötig quengelt.

### Offenbarung der Erfindung

Das erfinderische Kindersitz umfasst die Merkmale des Anspruchs 1. Weiterbildungen der Erfindung sind Gegenstand der Unteransprüche.

Der erfindungsgemäße Kindersitz, insbesondere zur Verwendung in einem Kraftfahrzeug, mit den Merkmalen des unabhängigen Anspruchs hat demgegenüber den Vorteil, dass das elektromotorische Verstellen der Sitzschale gegenüber dem Sitzrahmen des Kindersitzes auch während der Autofahrt ohne einen Zwischenstopp risikolos möglich ist. Dadurch kann der Fahrer in Begleitung eines Kleinkindes entspannter fahren - insbesondere auch auf der Autobahn. Wenn das Kind während der Fahrt eingeschlafen ist, kann der Fahrer die Sitzschale beispielsweise von einer Sitzposition in eine Schlafposition verstellen, ohne dass das Kind dabei aufwacht. Durch die Verstellung mittels eines Elektromotors kann dabei die Position der Sitzschale stufenlos eingestellt werden - und somit die optimale Sitz- bzw. Schlafposition eingestellt werden.

Durch die in den abhängigen Ansprüchen aufgeführten Maßnahmen sind vorteilhafte Weiterbildungen und Verbesserungen der in dem unabhängigen Anspruch vorgegebenen Ausführung möglich. Bevorzugt treibt der Elektromotor eine Gewindespindel an, die zwischen dem Sitzrahmen und der Sitzschale angeordnet ist. Die Spindel ist dabei auf einer Seite an dem Sitzrahmen, auf der anderen Seite an der Sitzschale befestigt, so dass beim Betätigen der Spindel die Sitzschale relativ zum Sitzrahmen verschwenkbar ist. In einer bevorzugten Ausführung ist der Elektromotor an dem ortsfesten Sitzrahmen angeordnet, und das andere Ende der Spindel, bzw. ein entsprechendes Verstellelement, an der Sitzschale. Dadurch muss die Masse des Elektromotors nicht mitbewegt werden und die Struktur des Sitzrahmens, der am Kraftfahrzeug anliegt, bietet mehr Bauraum für den Elektromotor.

Dadurch, dass die Sitzschale in der Regel drehbar oder verschwenkbar im Sitzrahmen gelagert ist, führt die Gewindespindel keine reine Linearbewegung auf. Daher ist besonders günstig der Elektromotor und/oder auch das Verstellelement jeweils drehbar am Sitzrahmen und/oder an der Sitzschale befestigt. Wird beispielsweise eine Drehspindel verwendet, wirkt diese mit einer Spindelmutter als Verstellelement zusammen, wodurch der Abstand zwischen der Spindelmutter und dem Elektromotor veränderbar ist, um eine Relativbewegung der Sitzschale gegenüber dem Sitzrahmen auszuführen.

Zum Verstellen der Sitzschale gegenüber dem Sitzrahmen sind am Sitzrahmen Führungsschienen ausgebildet, in denen die Sitzschale geführt wird. Durch die Form der Führungsschienen kann beispielsweise auch eine Dreh- oder Schwenkbewegung zwischen der Sitzschale und dem Sitzrahmen realisiert werden. Dadurch kann das Kind von einer aufrechten Sitzposition in eine mehr waagerechte Schlafposition gedreht werden.

Bei der Ausführung einer Drehspindel ist die Spindelmutter beispielsweise direkt unter der Sitzfläche der Sitzschale angeordnet. Bei einem minimalen Abstand der Spindelmutter zum Elektromotor befindet sich die Sitzschale in einer aufrechten Sitzposition, wohingegen bei einer maximalen Verstellung der Spindelmutter gegenüber dem Elektromotor bei einem maximalen Abstand die Sitzschale eine Schlafposition einnimmt, bei der das Kind möglichst flach in der Sitzschale liegt.

Besonders kompakt baut der Verstellantrieb, wenn der Elektromotor eine Ankerwelle aufweist, auf der ein Abtriebselement angeordnet ist, dass direkt ein Spindelgetriebe zum Verstellen der Gewindespindel antreibt. Ist das Abtriebselement beispielsweise als Schnecke ausgebildet, das mit einem entsprechenden Schneckenrad der Gewindespindel kämmt, kann ein solcher Spindelantrieb vorteilhaft auch selbsthemmend ausgebildet. Alternativ kann auch der Spindelantrieb direkt selbsthemmend ausgebildet sein. Dadurch kann jede beliebige Position der Sitzschale über das Schneckengetriebe zuverlässig fixiert werden. Die Schnecke und das Schneckenrad sind in einem sehr kompakten Getriebegehäuse des Schneckengetriebes gelagert, das den Elektromotor mit der anzutreibenden Gewindespindel verbindet.

Um im Falle eines Unfalls zu verhindern, dass die Sitzschale sich vom Sitzrahmen löst, ist besonders vorteilhaft um ein Getriebegehäuse aus Metall ein crashsicherer Käfig, vorzugsweise aus Metall, angeordnet, der verhindert, dass die Spindel aus dem Getriebegehäuse herausgerissen wird. Alternativ kann auch das Getriebegehäuse direkt crashsicher aus Metall hergestellt werden. Dabei ist der/das crashsichere Käfig/Getriebegehäuse mittels eines ersten Gelenkbolzens ebenfalls crashsicher am Sitzrahmen oder an der Sitzschale befestigt. Dazu kann eine Bohrung für den ersten Gelenkbolzen einstückig mit dem crashsicheren Käfig, oder innerhalb dieses Käfigs angeordnet werden.

Besonders platzsparend ist der Spindelantrieb als Drehspindel ausgebildet, deren erstes axiales Ende innerhalb des Getriebegehäuses an einem Axialanschlag anliegt. Dabei ist das Schneckenrad drehfest mit der Gewindespindel verbunden, so dass sich die Gewindespindel dreht, aber axial nicht verschiebt. Durch die Drehung der Gewindespindel wird hingegen die Spindelmutter auf der Gewindespindel verschoben, wodurch sich der Abstand des Verstellelements gegenüber dem Elektromotor verändert. Durch die axiale Abstützung der Gewindespindel innerhalb des Getriebegehäuses ist im Gegensatz zur Verwendung einer durchtauchenden Spindel nur auf einer Seite des Getriebegehäuses ein Bauraum für die Gewindespindel notwendig.

Bei einer solchen Ausführung ist die Spindelmutter beispielsweise an einem offenen Ende eines Verstellrohres befestigt, so dass sich die Gewindespindel durch die Spindelmutter hindurch in das Verstellrohr hineindreht. Ein solcher Spindelantrieb kann vollständig unterhalb der Sitzschale angeordnet werden, ohne dass sich die Spindel in Axialrichtung über die Sitzschale hinaus erstreckt.

Das Verstellrohr ist vorteilhaft als Stahlrohr ausgebildet, das am gegenüberliegenden Ende direkt eine zweite Bohrung für den zweiten Gelenkbolzen aufweist. Der Elektromotor des Kindersitzes kann im Kraftfahrzeug besonders vorteilhaft direkt mit der Bordspannung des Kraftfahrzeugs versorgt werden. Dazu ist am Elektromotor ein Anschlusskabel ausgebildet, das beispielsweise mit der Autobatterie verbindbar ist. Hierzu ist am Ende des Anschlusskabels beispielsweise ein Stecker ausgebildet, der in den Zigarettenanzünder im Kraftfahrzeug einsteckbar ist. Dabei wird der Elektromotor beispielsweise mit ca. 12 Volt betrieben, alternativ kann auch eine andere Spannung (48V, 110V, 220V) verwendet werden.

Zum Betätigen des Elektromotors ist an diesem ein Bedienelement angeordnet, an dem zumindest die zwei Drehrichtungen des Elektromotors ansteuerbar sind. Dabei kann beispielsweise durch einmaliges Betätigen des Bedienelements der Motor gestartet werden, der dann solange läuft, bis er eine vorgebbare Endposition erreicht hat. Dies kann beispielsweise analog zur Betätigung einer automatischen Fensterscheibe realisiert werden. Das Bedienelement ist bevorzugt im Anschlusskabel des Kindersitzes integriert, so dass der Fahrer auch während der Fahrt leicht Zugang zum Bedienelement hat.

In einer alternativen Ausführung kann jedoch das Bedienelement auch als kabellose Fernbedienung ausgebildet sein, dessen Bedienschalter beispielsweise am Lenkrad oder an Armaturen des Kraftfahrzeugs angeordnet ist.

In einer weiteren Ausführung kann über das Anschlusskabel auch eine Sitzheizung in der Sitzschale mit elektrischer Energie versorgt werden. Dabei kann über den Stecker - der beispielsweise im Zigarettenanzünder einsteckbar ist - sowohl der Elektromotor zur Verstellung der Sitzschale betätigt werden, als auch gleichzeitig die Kindersitzheizung der Sitzschale betrieben werden.

Schläft das Kind während der Fahrt in der Sitzposition des Kindersitzes ein, kann die Sitzschale elektromotorisch von einer Anfangsposition in Sitzstellung bevorzugt in eine Endposition der Liegestellung verstellt werden. Es können jedoch auch beliebige Positionen zwischen diesen beiden Endpositionen eingestellt werden, da der Elektromotor in jeder Position der Sitzschale gestoppt werden kann. Zusätzlich können auch bevorzugte beliebige Positionen voreingestellt werden, die gezielt vom Elektromotor angefahren werden. Gegenüber manuell verstellbaren Kindersitzen hat die elektromotorische Verstellung den Vorteil, dass jede beliebige Position stufenlos eingestellt werden kann, wobei durch die Verstellvorrichtung jede Position gleichzeitig auch zuverlässig gesichert ist, insbesondere durch die Verwendung einer selbsthemmenden Getriebeeinheit (Schneckengetriebe und/oder Spindelgetriebe).

Bei einer optionalen Ausführung der Erfindung kann der Elektromotor in einem sogenannten Wiegemodus betrieben werden, bei der die Sitzschale über einen längeren Zeitraum ständig zwischen zwei vorgebbaren Positionen hin- und herbewegt wird, um das Kind einzuschläfern. Ein Kindersitz mit solchem Wiegemodus kann beispielsweise auch außerhalb des Kraftfahrzeugs im Wohnbereich verwendet werden, wobei hier der Elektromotor beispielsweise mittels eines Akkus betrieben wird, oder ein Stecker für eine Haussteckdose aufweist.

Durch die Anordnung eines Schneckengetriebes zwischen dem Elektromotor und der Gewindespindel kann einerseits in kompakt bauendes Untersetzungsgetriebe und andererseits ein selbsthemmendes Getriebe für die Fixierung der Sitzschale zu Verfügung gestellt werden. Ist das Schneckenrad auf der Getriebespindel innerhalb eines Getriebegehäuses gelagert, kann das Schneckenrad mittels Sicherungsscheiben beim Auftreten von Crash-Kräften zuverlässig im Getriebegehäuse gehalten werden. Das Schneckenrad liegt bevorzugt mit seiner Stirnseite unmittelbar an der Sicherungsscheibe an, die insbesondere aus Metallgefertigt ist.

Besonders günstig kann das Schneckenrad drehfest auf das Außengewinde der Gewindespindel aufgespritzt werden, wobei der Formschuss bezüglich der Axialrichtung ein herausreißen der drehbaren Spindel aus dem Getriebegehäuse verhindert. Bei der Ausführung einer durchtauchenden Spindel ist das Schneckenrad mit einem Innengewinde auf dem korrespondierenden Außengewinde der Gewindespindel drehbar angeordnet, wobei die ineinander eingreifenden Gewinde den Formschluss bezüglich der axialen Crash-Sicherung darstellen.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
- Fig. 1: eine Gesamtansicht eines Kindersitzes gemäß einem ersten Ausführungsbeispiel,
- Fig. 2: eine erfindungsgemäße Detaildarstellung einer elektromotorischen Verstellvorrichtung eines Kindersitzes,
- Fig. 3 und 4: zwei weitere erfindungsgemäße Ausführungsbeispiele von elektromotorischen Verstellvorrichtungen eines Kindersitzes.

### Beschreibung der Ausführungsbeispiele

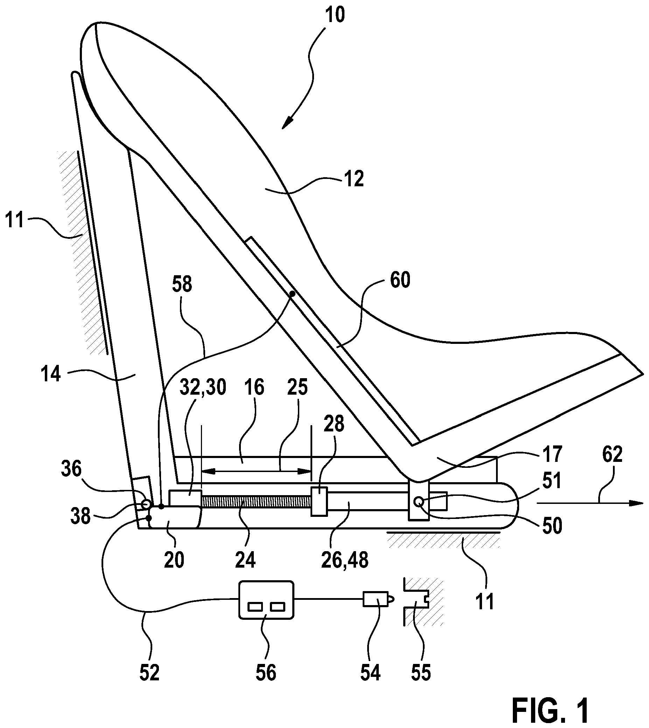

Fig. 1 zeigt einen Kindersitz 10 für ein Baby oder Kleinkind, wie er zum Transport von Kindern in Kraftfahrzeugen verwendet werden kann. Der Kindersitz 10 weist einen Sitzrahmen 14 auf, in dem eine Sitzschale 12 beweglich gelagert ist. Der Kindersitz 10 wird beispielsweise mit dem Sitzrahmen 14 auf einen Kraftfahrzeugsitz 11 gestellt und bevorzugt mittels eines Sicherheitsgurts befestigt. An dem Sitzrahmen 14 ist eine Führungsstruktur 16 ausgebildet, die mit Führungselementen 17 der Sitzschale 12 zusammenwirkt. Dadurch kann die Sitzschale 12 gegenüber dem Sitzrahmen 14 verdreht bzw. verschwenkt werden, so dass die Sitzschale 12 von einer Sitzposition in eine Schlafposition verstellt werden kann. Im Ausführungsbeispiel erfolgt solch eine Verschwenkung zwischen der Sitz- und Schlafposition mittels eines Elektromotors 20. Der Elektromotor 20 treibt hier eine Gewindespindel 24 an, die mit einem Verstellelement 26 zusammenwirkt. Im Ausführungsbeispiel ist der Elektromotor 20 an dem Sitzrahmen 14 befestigt, und das Verstellelement 26 an der Sitzschale 12. Durch das elektromotorische Antreiben der Gewindespindel 24 verändert sich der Abstand 25 zwischen dem Elektromotor 20 und dem Verstellelement 26, so dass dadurch die Sitzschale 12 mittels dessen Führungselementen 17 in der Führungsstruktur 16 des Sitzrahmens 14 verschoben wird. Sowohl der Elektromotor 20, als auch das Verstellelement 26 sind hier beide gelenkig an dem Sitzrahmen 14 bzw. an der Sitzschale 12 befestigt. Dadurch kann die Verstellbewegung abweichend von einer reinen Linearbewegung gleichzeitig auch eine gewisse Drehbewegung, bzw. Schwenkbewegung ausführen. Das Verstellelement 26 ist beispielsweise als Rohr 48 ausgebildet, an dessen einen Ende 46 eine Spindelmutter 28 angeordnet ist. Dabei kann die Gewindespindel 24 durch die Spindelmutter 28 hindurch in das Rohr 48 eingedreht werden, um den Abstand 25 zwischen dem Elektromotor 20 und dem Verstellelement 26 zu verändern. Dabei ist am gegenüberliegenden Ende 47 des Rohrs 48 beispielsweise eine zweite Bohrung 51 ausgebildet, über die das Rohr 48 gelenkig mit einem zweiten Gelenkbolzen 50 der Sitzschale 12 verbunden ist. An dem Elektromotor 20 ist eine erste Bohrung 36 ausgebildet, die einen ersten Gelenkbolzen 38 aufnimmt, der den Elektromotor 20 gelenkig mit dem Sitzrahmen 14 verbindet. Der Elektromotor 20 treibt die Gewindespindel 24 über ein Spindelgetriebe 30 an, das hier direkt am Elektromotor 20 angeordnet ist. Der Elektromotor 20 wird über ein Anschlusskabel 52 mit Strom versorgt, das mit einer Energiequelle im Kraftfahrzeug 11 verbindbar ist. Beispielsweise ist am Ende des Anschlusskabels 52 ein Stecker 54 ausgebildet, der in den sogenannten Zigarettenanzünder 55 im Kraftfahrzeug 11 einsteckbar ist.

Im Ausführungsbeispiel ist im Anschlusskabel 52 ein Bedienelement 56 ausgebildet, mit dem der Elektromotor 20 angesteuert werden kann, um die Sitzschale 12 gegenüber dem Sitzrahmen 14 elektromotorisch zu verstellen. Dabei können bevorzugte Positionen der Sitzschale 12 vorgegeben werden. Beispielsweise kann eine Anfangsposition mit minimalem Abstand 25 zwischen dem Elektromotor 20 und dem Verstellelement 26 als Sitzposition vorgegeben werden. Entsprechend kann eine Position mit maximalem Abstand 25 zwischen dem Elektromotor 20 und dem Verstellelement 26 als Liegeposition vorgegeben werden. Das Bedienelement 56 kann derart ausgebildet sein, dass durch einen Knopfdruck automatisch die Anfangsposition oder die Endposition der Sitzschale 12 eingenommen wird.

In einer Variation der Erfindung kann am Bedienelement 56 auch ein Wiegemodus eingegeben werden, bei dem die Sitzschale 12 über einen längeren Zeitraum ständig zwischen zwei vorgebbaren Positionen hin- und herbewegt wird. In einer weiteren Alternative der Erfindung kann der Elektromotor 20 auch mittels einer Fernbedienung angesteuert werden, deren Bedienteil insbesondere auch am Armaturenbrett oder im Lenkrad des Kraftfahrzeugs 11 angeordnet werden kann. In einer weiteren Ausführung kann über das Anschlusskabel 52 auch eine Kindersitzheizung 60 betrieben werden, um das Kind entsprechend zu temperieren. Dabei kann zwischen dem Elektromotor 20 und der Sitzschale 12 für die Stromversorgung der Kindersitzheizung 60 ein flexibles Stromkabel 58 angeordnet sein.

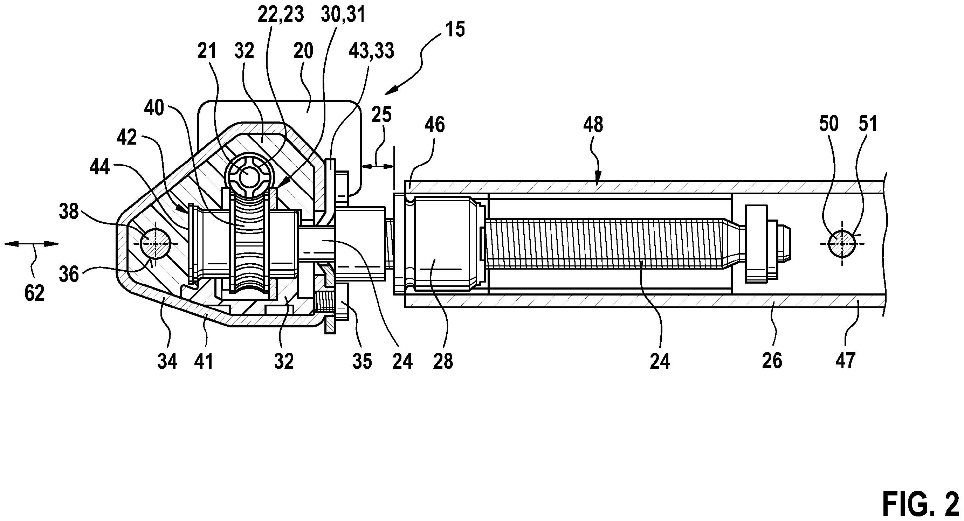

In Fig. 2 ist eine Schnittdarstellung eines weiteren Ausführungsbeispiels einer elektromotorischen Verstelleinheit 15 dargestellt. Der Elektromotor 20 weist eine Ankerwelle 21 auf, auf der ein Abtriebsritzel 22 angeordnet ist. Das Abtriebsritzel 22 ist hier als Schnecke 23 ausgebildet, die mit einem Schneckenrad 40 kämmt, das die Gewindespindel 24 in Drehung versetzt. Dieses Schneckengetriebe 31 zwischen dem Elektromotor 20 und der Gewindespindel 24 stellt hierbei das Spindelgetriebe 30 dar, das in einem Getriebegehäuse 32 gelagert ist. Das Schneckenrad 40 ist in diesem Fall drehfest auf der Gewindespindel 24 angeordnet, die mit einem axialen Ende 42 axial an einem Axialanschlag 44 im Getriebegehäuse 32 anliegt. Hierbei ist das Schneckenrad 40 drehbar im Getriebegehäuse 32 gelagert und gegen eine Verschiebung in Axialrichtung 62 gesichert. Um die Sitzschale 12 auch in einem Crashfall sicher an dem Sitzrahmen 14 zu halten, ist um das Getriebegehäuse 32 ein sogenannter Crash-Käfig 34 ausgebildet, aus dem die Gewindespindel 24 auch bei einem heftigen Auffahrunfall nicht herausgerissen werden kann. Als Crash-Käfig 34 kann auch ein Crash-Bügel verwendet werden, der die Spindel nur bezüglich der Crashkräfte in Axialrichtung 62 sichert. Der Crash-Bügel/Käfig 34 ist vorzugsweise aus Metall gefertigt, der das Getriebegehäuse aus Kunststoff umschließt. Der Crash-Bügel/Käfig 34 ist hier insbesondere aus zwei Teilen 41, 43 gefertigt, die miteinander mittels Verbindungsschrauben 35 verschraubt oder miteinander verschweißt sind. Dabei kann das erste Teil 41 als u-förmiger Bügel oder offener Käfig ausgebildet sein, die mit dem zweiten Teil 43 als einer Art Sicherungsscheibe 33 verschlossen werden, durch die die Gewindespindel 24 herausragt. Dabei ist die erste Bohrung 36 innerhalb des Crash-Käfigs 34 oder des Crash-Bügels angeordnet, so dass auch der erste Gelenkbolzen 38 im Crashfall zuverlässig innerhalb des Crash-Käfigs/-Bügels 34 verbleibt. Ist das Rohr 48 beispielsweise als Stahlrohr ausgebildet, das über den zweiten Gelenkbolzen 50 ebenfalls crashsicher mit der Sitzschale 12 verbunden ist, ist die Sitzschale 12 - unabhängig von der Ausrichtung in oder gegen die Fahrtrichtung des Kraftfahrzeugs 11 - zuverlässig mit dem Sitzrahmen 14 verbunden. Die Getriebeanordnung 31, 30 ist selbsthemmend ausgebildet, so dass beim Abschalten des Elektromotors 20 die Sitzschale 12 in jeder beliebigen Verstellposition über das Schneckengetriebe 31 und /oder das Spindelgetriebe 30 zuverlässig positioniert und gesichert bleibt. Ein solcher Spindelantrieb ermöglicht dadurch eine stufenlose Positionierung der Sitzschale 12 gegenüber dem Sitzrahmen 14.

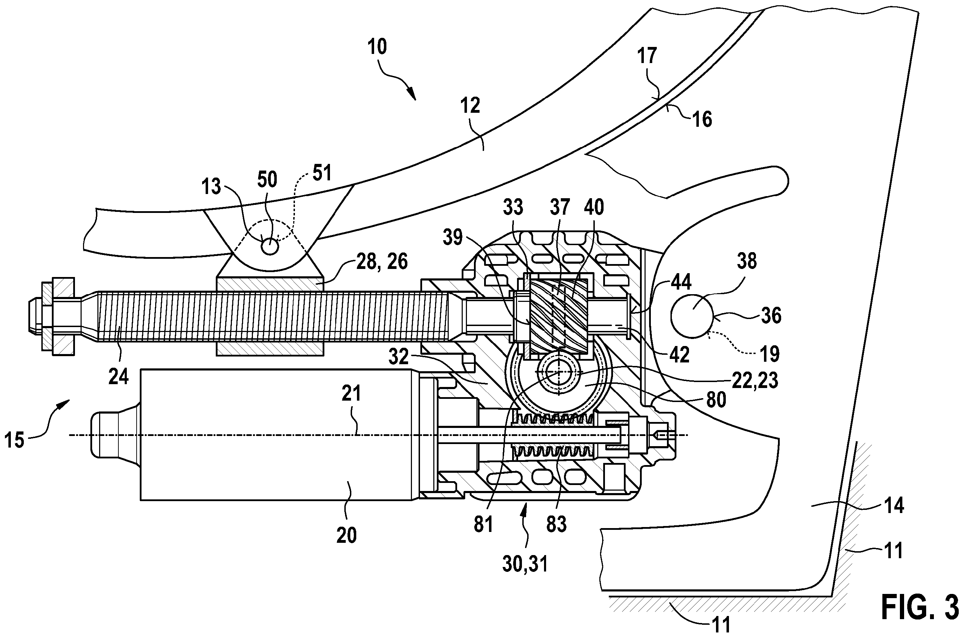

In einer Variation der elektromotorischen Verstellvorrichtung 15 gemäß Fig. 3 wird die drehende Spindel 24 über ein doppeltes Schneckengetriebe 31 angetrieben. Der Elektromotor 20 treibt in Verlängerung der Ankerwelle 21 eine erste Schnecke 83 an, die einteilig oder separat von der Ankerwelle 21 gefertigt ist. Die erste Schnecke 83 kämmt mit einem ersten Schneckenrad 80, das auf einer Achse 81 senkrecht zur Ankerwelle 21 gelagert ist. Das erste Schneckenrad 80 ist drehfest mit einer zweiten Schnecke 42 verbunden, die mit dem zweiten Schneckenrad 40 kämmt, das - wie in der Ausführung gemäß Fig. 2 - auf der Gewindespindel 24 angeordnet ist. Dadurch verläuft die Gewindespindel 24 etwa parallel zur Ankerwelle 21 des Elektromotors 20, wodurch ein sehr kompakter Spindelantrieb mit einer sehr großen Untersetzung zu Verfügung gestellt wird. Dadurch wird eine große Selbsthemmung des Spindelgetriebes 30 realisiert. Das zweite Schneckenrad 40 ist wieder drehbar im Getriebegehäuse 32 gelagert und drehfest auf der Gewindespindel 24 befestigt. Beispielsweise ist das zweite Schneckenrad 40 direkt auf das Außenprofil 37 der Gewindespindel 24 aufgespritzt. Um das Spindelgetriebe 30 crashsicher zu gestalten, kann innerhalb des zweiten Schneckenrads 24 das Außenprofil 37 auf dem Umfang der Getriebespindel 24 derart ausgebildet werden, dass dieses einen größeren Außendurchmesser aufweist, als der Innendurchmesser einer axialen Sicherungsscheibe 33, die als Crash-Sicherung dient. Die axiale Sicherungsscheibe 33 umschließt die Gewindespindel 24 über deren gesamten Umfang. Wirken nun große Zugkräfte in Axialrichtung 62 auf die Getriebespindel 24, bei der das erste Schneckenrad 40 aus Kunststoff zerstört wird, liegt das Außenprofil 37 der Gewindespindel 24 im Bereich des ersten Schneckenrads 40 axial am Sicherungsring 33 an und kann somit nicht aus dem Getriebegehäuse herausgerissen werden. Bei dieser Ausführung ist um das Getriebegehäuse 32 kein Crash-Käfig 34 angeordnet, sondern das Getriebegehäuse 32 selbst aus einem festeren Material gefertigt als das Schneckenrad 40, beispielsweise aus einem faserverstärktem Polyamid. Der Sicherungsring 33 ist aus Metall gefertigt und dient bevorzugt gleichzeitig als axialer Anlauf für das zweite Schneckenrad 40. Der Sicherungsring 33 ist dabei innerhalb des Getriebegehäuse 32 gelagert und liegt axial unmittelbar an einer Stirnseite 39 des zweiten Schneckenrads 40 an. Das Außenprofil 37 innerhalb des zweiten Schneckenrads 40 kann einstückig mit dem Gewinde der Gewindespindel 24 gefertigt sein, oder als separat gefertigter Ring auf das Gewinde der Gewindespindel 24 aufgeschraubt sein. In einer alternativen Ausführung kann das zweite Schneckenrad 40 auch direkt auf das normale Gewinde der Gewindespindel 24 aufgespritzt sein. Das Gewinde kann hierzu auch einen radialen Einstich aufweisen, um einen größeren Formschluss zwischen dem Schneckenrad 40 und der Gewindespindel 24 in Axialrichtung 62 zu erzeugen. Am Getriebegehäuse 32 ist hier mindestens eine Öse als erste Bohrung 36 ausgeformt, in die ein erster Gelenkbolzen 38 eingreift. Dieser erste Gelenkbolzen 38 verbindet den Spindelantrieb gelenkig mit dem Sitzrahmen 14 des Kindersitzes 10. Dazu ist am Sitzrahmen 14 ein korrespondierendes Loch 19 für den ersten Gelenkbolzen 38 ausgebildet. Ebenso ist an der Spindelmutter 28 eine zweite Bohrung 51 ausgebildet, in die ein zweiter Gelenkbolzen 50 eingreift, um den Spindelantrieb andererseits crashsicher mit der Sitzschale 12 des Kindersitzes 10 gelenkig zu verbinden. Dazu ist an der Sitzschale 12 eine korrespondierende Aufnahme 13 für den zweiten Gelenkbolzen 50 ausgebildet. Auch bei dieser Ausführung dreht sich die Gewindespindel 24 mit dem zweiten Schneckenrad 40, wird jedoch nicht axial verschoben. Vielmehr stützt sich das axiale Ende 42 der Gewindespindel 24 an einem gegenüberliegenden Axialanschlag 44 im Getriebegehäuse 32 ab. Die Spindelmutter 28 wird mit der Drehbewegung der Gewindespindel 24 in Axialrichtung 62 der Spindel 24 verstellt. Mit der Verstell-Bewegung der Spindelmutter 28 wird die Sitzschale 12 gegenüber dem Sitzrahmen verstellt, wobei durch die gelenkige Anbindung des Spindelantriebs dessen Linearbewegung auch in eine bogenförmige Relativbewegung entlang der Führung 16, 17 zwischen dem Sitzrahmen 14 und der Sitzschale 12 umgesetzt werden kann.

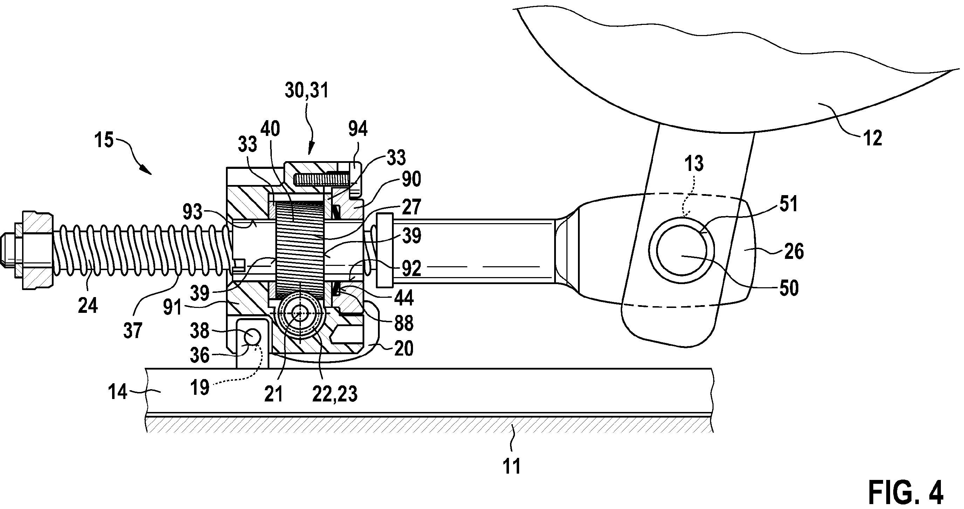

Alternativ zu dem dargestellten Spindelantrieb kann gemäß Fig. 4 beispielsweise auch eine sogenannte "durchtauchende Gewindespindel" verwendet werden, bei der die Gewindespindel 24 axial durch das Schneckenrad 40 hindurch verschoben wird, ohne dass sich die Gewindespindel 24 dabei dreht. Anstelle der Spindelmutter 28 kann dann als Verstellelement 26 das Ende der Gewindespindel 24 direkt mittels der zweiten Bohrung 51 mit dem zweiten Gelenkbolzen 50 an der Sitzschale 12 befestigt werden. Hierzu ist an der Sitzschale 12 wieder die korrespondierende Aufnahme 13 für den zweiten Gelenkbolzen 50 ausgebildet. Das erste Schneckenrad 40 ist hingegen bei dieser Ausführung drehbar auf der Gewindespindel 24 angeordnet und drehbar im Getriebegehäuse 32 gelagert. Das erste Schneckenrad 24 weist eine Außenverzahnung 27 auf, in die eine entsprechende Verzahnung der ersten Schnecke 22 antreibend eingreift. Die Schnecke 22 kann direkt von der Ankerwelle 21 des Elektromotors 20 angetrieben werden, oder über eine weitere Getriebestufe. Das erste Schneckenrad 40 liegt axial an beiden Stirnseiten 39 an jeweils einem Sicherungsring 33 an, die im Getriebegehäuse 32 gelagert sind. Dabei ist zwischen einem Sicherungsring 33 und dem entsprechenden axialen Anschlag 44 am Getriebegehäuse 32 ein axiales Federelement 88 angeordnet, das das Axialspiel zwischen dem zweiten Schneckenrad 40 und dem Getriebegehäuse 32 eliminiert. Die beiden Sicherungsringe weisen einen geringeren Innendurchmesser auf, als der Außendurchmesser der Außenverzahnung 27 des ersten Schneckenrads 40. Treten im Crash-Fall hohe Axialkräfte auf die Gewindespindel 24 auf, stützt sich die entsprechende Stirnseite 39 des ersten Schneckenrads 40 axial an dem entsprechenden Sicherungsring 33 ab. der radial mit der Außenverzahnung 27 überlappt. Das Schneckenrad 40 greift über seine gesamte axiale Länge in das Gewinde der Gewindespindel 24 ein, so dass das Schneckenrad 40 crash-sicher innerhalb des Getriebegehäuses 32 gehalten wird. Bei dieser Ausführung ist das Getriebegehäuse 32 wieder aus faserverstärktem Kunststoff gefertigt, damit beim Crash die Sicherungsringe 33 innerhalb des Getriebegehäuses 32 fixiert bleiben. Das Getriebegehäuse 32 ist beispielsweise zweiteilig ausgebildet, wobei ein Gehäusedeckel 90 axial auf eine Gehäuseschale 91 aufgesetzt wird, wobei beide Gehäuseteile 90, 91 axiale Durchbrüche 92, 93 aufweisen, die axial von der Gewindespindel 32 durchdrungen werden. Die beide Gehäuseteile 90, 91 werden beispielsweise axial mittels Gehäuseschrauben 94 verschraubt. Aufgrund der bruchfesten Ausführung des Getriebegehäuses 32 kann hier auf einen zusätzlichen Crash-Bügel oder-Käfig 34 verzichtet werden. Das Getriebegehäuse 32 weist direkt die erste Bohrung 36 auf, in die der erste Gelenkbolzen 38 eingreift, um über das entsprechende Loch 19 mit dem Sitzrahmen 14 verbunden zu werden.

Es sei angemerkt, dass hinsichtlich der in den Figuren und in der Beschreibung gezeigten Ausführungsbeispiele vielfältige Kombinationsmöglichkeiten der einzelnen Merkmale untereinander möglich Alternativ zum Schneckengetriebe 31 kann auch ein Elektromotor 20 mit einer anderen Getriebebauform, wie einem Exzentergetriebe oder einem Planetengetriebe, verwendet werden. Ebenso ist die konkrete Befestigung des Verstellelements 26 und des Spindelantriebs variierbar, und beispielsweise auch die Befestigung an der Sitzschale 12 mit dem Sitzrahmen 14 vertauschbar. Der Elektromotor 20 kann auch mit einem eigenen aufladbaren Akku betrieben werden, so dass der Kindersitz 10 auch außerhalb des Kraftfahrzeugs - ohne Netzanschluss - elektrisch verstellbar ist. Dabei kann der Akku baulich in den Kindersitz integriert sein. Alternativ kann das Anschluss-Kabel 52 auch mit einem Netzstecker ausgebildet sein, der an eine beliebige Steckdose, beispielsweise 220V oder 110V im Wohnhaus, anschließbar ist. Dadurch ist der Kindersitz 10 auch im Haus beispielsweise mit dem Wiegemodus als "Einschlafwiege" nutzbar. Der Elektromotor 20 kann über ein Bedienelement 56 betätigt werden, das in das Anschluss-Kabel 52 oder direkt in den Kindersitz 10 integriert ist. Es ist auch möglich, dass der Elektromotor 20 kabellos mittels einer Fernbedienung ansteuerbar ist. Bevorzugt ist die Spindelmutter 28 unterhalb einer Sitzfläche 13 der Sitzschale 12 befestigt, und weist in der Liegeposition einen maximalen Abstand 25 und in der Sitzposition einen minimalen Abstand 25 zum Elektromotor 20 auf.

Vorteilhaft ist die Bohrung 36 für den ersten Gelenkbolzen 38 unmittelbar im Getriebegehäuse 32 aus Kunststoff ausgebildet ist, wodurch mittels des ersten Gelenkbolzen 38 der Elektromotor 20 zusammen mit dem Getriebegehäuse 32 gelenkig am Sitzrahmen 14 oder an der Sitzschale 12 angeordnet ist.

## Patentansprüche

1. Kindersitz (10), insbesondere zum Befestigen auf einem Kraftfahrzeugsitz (11), mit einer Sitzschale (12), die zum Verstellen der Sitz- oder Liegeposition relativ zu einem Sitzrahmen (14) verschwenkbar in diesem gelagert ist, wobei die Relativbewegung zwischen der Sitzschale (12) und dem Sitzrahmen (14) mittels eines Elektromotors (20) durchführbar ist, der über ein Spindelgetriebe mit einer Getriebespindel (24) wirkverbunden ist, und der Elektromotor (20) eine Ankerwelle (21) aufweist, die eine Schnecke (23) antreibt, die mit einem Schneckenrad (40) kämmt, das auf der Getriebespindel (24) angeordnet ist, wobei die Getriebespindel (24) mit einem Verstellelement (26) zusammenwirkt, das die Sitzschale (12) gegenüber dem Sitzrahmen (14) verstellt, wobei das Verstellelement (26) unmittelbar mit der Sitzschale (12) verbunden ist, und der Sitzrahmen (14) eine Führungsstruktur (16) aufweist, in der Führungselemente (17) der Sitzschale (12) geführt werden, wobei der Elektromotor (20) gelenkig im Sitzrahmen (14) gelagert ist, und das Verstellelement (26) als Spindelmutter (28) ausgebildet ist, die einerseits gelenkig an der Sitzschale (12) befestigt ist und andererseits drehbeweglich die Getriebespindel (24) aufnimmt.

2. Kindersitz (10) nach Anspruch 1, **dadurch gekennzeichnet, dass** die Getriebespindel (24) über das als Schneckengetriebe (31) ausgebildete Spindelgetriebe (30) mit dem Elektromotor (20) verbunden ist, wobei das Schneckenrad (40) drehfest auf der Gewindespindel (24) angeordnet ist, wobei die Gewindespindel (24) sich mit einem axialen Ende (42) innerhalb eines Getriebegehäuses (32) des Schneckengetriebes (31) an einem Axialanschlag (44) abstützt.

3. Kindersitz (10) nach Anspruch 1 oder 2, **dadurch gekennzeichnet, dass** die Spindelmutter (28) am Ende (46) eines Rohres (48) angeordnet ist, in das hinein die Gewindespindel (24) eindrehbar ist, wobei das Rohr (48) über einen zweiten Gelenkbolzen (50) schwenkbar - vorzugsweise an der Sitzschale (12) - gelagert ist.

4. Kindersitz (10) nach einem der vorhergehenden Ansprüche, **dadurch gekennzeichnet, dass** das Schneckenrad (40) mit einem Innengewinde drehbar auf dem Gewinde der Gewindespindel (24) angeordnet ist sodass die Gewindespindel (24) ohne sich zu drehen axial durch das Innengewinde des Schneckenrads (40) hindurchschraubbar ist, und ein Ende der Gewindespindel (24) an der Sitzschale (12) oder an dem Sitzrahmen (14) befestigt ist.

5. Kindersitz (10) nach einem der vorhergehenden Ansprüche, **dadurch gekennzeichnet, dass** das Spindelgetriebe als doppeltes Schneckengetriebe (31) ausgebildet ist, wobei die Gewindespindel (24) näherungsweise parallel zur Ankerwelle (21) des Elektromotors (20) ausgerichtet ist.

6. Kindersitz (10) nach einem der vorhergehenden Ansprüche, **dadurch gekennzeichnet, dass** der Elektromotor (20) ein Anschluss-Kabel (52) aufweist, das - insbesondere über einen Zigarettenanzünder (54) - mit der elektrischen Stromversorgung (55) des Kraftfahrzeugs verbindbar ist, oder der Elektromotor (20) mittels eines aufladbaren Akkus betreibbar ist, der vorzugsweise in den Sitzrahmen (14) integriert ist.

7. Kindersitz (10) nach einem der vorhergehenden Ansprüche, **dadurch gekennzeichnet, dass** an der Sitzschale (12) eine Sitzheizung (60) angeordnet ist, die über die Stromversorgung (55) des Elektromotors (20) betreibbar ist.

8. Kindersitz (10) nach einem der vorhergehenden Ansprüche 2 bis 7, **dadurch gekennzeichnet, dass** die Sitzschale (12) stufenlos gegenüber dem Sitzrahmen (14) verstellbar ist und in jeder Position über das selbsthemmende Schneckengetriebe (31) zuverlässig gegenüber dem Sitzrahmen (14) fixierbar ist, wobei insbesondere Vorzugspositionen - wie beispielsweise die beiden Endpositionen der Spindelmutter (28) als Sitzoder Liegestellung der Sitzschale (12) - vorgebbar sind.

9. Kindersitz (10) nach einem der vorhergehenden Ansprüche, **dadurch gekennzeichnet, dass** der Elektromotor (20) in einem Wiegemodus ansteuerbar ist, in dem die Sitzschale (12) kontinuierlich zwischen zwei vorgebbaren Sollpositionen hin und her verstellbar ist.

10. Kindersitz (10) nach einem der vorhergehenden Ansprüche 2 bis 9, **dadurch gekennzeichnet, dass** die Getriebespindel (24) crash-sicher in dem Getriebegehäuse (32) des Spindelgetriebes (30) gelagert ist, wobei das Schneckenrad (40) drehbar in dem Getriebegehäuse (32) gelagert ist und im oder am Getriebegehäuse (32) mindestens ein Sicherungsring (33) angeordnet ist, der die Gewindespindel (24) umschließt, und an der sich die Getriebespindel (24) beim Auftreten von Crash-Kräften über das Schneckenrad (40) axial abstützt, um nicht aus dem Getriebegehäuse (32) heraus gerissen zu werden, wobei vorzugsweise der mindestens eine Sicherungsring (33) aus Metall gefertigt ist.

11. Kindersitz (10) dem Anspruch 10, **dadurch gekennzeichnet, dass** innerhalb des Schneckenrads (40) auf der Gewindespindel (24) ein Außenprofil (37) ausgebildet ist, auf das das Schneckenrad (40) aufgespritzt ist, und vorzugsweise das Außenprofil (37) einen größeren Außendurchmesser aufweist, als ein Innendurchmesser des mindestens einen Sicherungsrings (33).

12. Kindersitz (10) nach einem der vorhergehenden Ansprüche 10 oder 11, **dadurch gekennzeichnet, dass** mindestens eine axiale Stirnseite (39) des Schneckenrads (40) axial unmittelbar an dem mindestens einen Sicherungsring (33) als axiale Anlaufscheibe anliegt, wobei der mindestens eine Sicherungsring (33) innerhalb des Getriebegehäuses (32) angeordnet ist, das vorzugsweise aus einem faserverstärkten Kunststoff ausgebildet ist.

13. Kindersitz (10) nach einem der vorhergehenden Ansprüche 2 bis 12, **dadurch gekennzeichnet, dass** das Getriebegehäuse (32) von einem Crash-Käfig (34) umschlossen ist, und innerhalb des Crash-Käfigs (34) oder am Crash-Käfig (34) eine Bohrung (36) für einen ersten Gelenkbolzen (38) ausgebildet ist, mit dem der Elektromotor (20) gelenkig - vorzugsweise am Sitzrahmen (14) - gelagert ist.

## Claims

1. Child seat (10), in particular for fastening on a motor vehicle seat (11), with a seat shell (12) which, for the adjustment of the sitting position or reclining position, is mounted in a seat frame (14) so as to be pivotable relative thereto, wherein the relative movement between the seat shell (12) and the seat frame (14) can be carried out by means of an electric motor (20) which is operatively connected to a gear spindle (24) via a spindle gear, and the electric motor (20) has an armature Shaft (21) which drives a worm (23) which meshes with a worm wheel (40) arranged on the gear spindle (24), wherein the gear spindle (24) interacts with an adjustment element (26) which adjusts the seat shell (12) in relation to the seat frame (14), wherein the adjustment element (26) is connected directly to the seat shell (12), and the seat frame (14) has a guide structure (16) in which guide elements (17) of the seat shell (12) are guided, wherein the electric motor (20) is mounted in an articulated manner in the seat frame (14), and the adjustment element (26) is designed as a spindle nut (28) which is fastened in an articulated manner to the seat shell (12) on the one hand and rotatably receives the gear spindle (24) on the other hand.

2. Child seat (10) according to Claim 1, **characterized in that** the gear spindle (24) is connected to the electric motor (20) via the spindle gear (30) which is in the form of a worm gear (31), wherein the worm wheel (40) is arranged on the threaded spindle (24) for rotation therewith, wherein the threaded spindle (24) is supported at an axial end (42) within a gear housing (32) of the worm gear (31) on an axial stop (44) .

3. Child seat (10) according to Claim 1 or 2, **characterized in that** the spindle nut (28) is arranged at the end (46) of a tube (48), into which the threaded spindle (24) can be screwed, wherein the tube (48) is mounted - preferably on the seat shell (12) - so as to be pivotable via a second joint pin (50).

4. Child seat (10) according to one of the preceding claims, **characterized in that** the worm wheel (40) is arranged with an inner thread in a rotatable manner on the thread of the threaded spindle (24) such that the threaded spindle (24), without rotating, can be screwed axially through the inner thread of the worm wheel (40), and one end of the threaded spindle (24) is fastened to the seat shell (12) or to the seat frame (14).

5. Child seat (10) according to one of the preceding claims, **characterized in that** the spindle gear is in the form of a double worm gear (31), wherein the threaded spindle (24) is oriented approximately parallel to the armature shaft (21) of the electric motor (20).

6. Child seat (10) according to one of the preceding claims, **characterized in that** the electric motor (20) has a connection cable (52) which is connectable - in particular via a cigarette lighter (54) - to the electrical power supply (55) of the motor vehicle, or the electric motor (20) can be operated by means of a rechargeable battery which is preferably integrated in the seat frame (14).

7. Child seat (10) according to one of the preceding claims, **characterized in that** a seat heater (60) which can be operated via the power supply (55) of the electric motor (20) is arranged on the seat shell (12).

8. Child seat (10) according to one of the preceding Claims 2 to 7, **characterized in that** the seat shell (12) is adjustable in an infinitely variable manner in relation to the seat frame (14) and in each position can be reliably fixed in relation to the seat frame (14) via the self-locking worm gear (31), wherein in particular preferred positions can be 'predetermined - such as, for example, the two end positions of the spindle nut (28) as a sitting or reclining position of the seat shell (12).

9. Child seat (10) according to one of the preceding claims, **characterized in that** the electric motor (20) can be activated in a rocking mode in which the seat shell (12) is adjustable continuously to and fro between two predeterminable desired positions.

10. Child seat (10) according to one of the preceding Claims 2 to 9, **characterized in that** the gear spindle (24) is mounted in a crash-proof manner in the gear housing (32) of the spindle gear (30), wherein the worm wheel (40) is mounted rotatably in the gear housing (32) and at least one securing ring (33) is arranged in or on the gear housing (32), said securing ring surrounding the threaded spindle (24) and on which the gear spindle (24) is axially supported via the worm wheel (40) when crash forces occur, so as not to be torn out of the gear housing (32), wherein the at least one securing ring (33) is preferably manufactured from metal.

11. Child seat (10) according to Claim 10, **characterized in that** an outer profile (37) on which the worm wheel (40) is moulded is formed on the threaded spindle (24) within the worm wheel (40), and the outer profile (37) preferably has a larger outer diameter than an inner diameter of the at least one securing ring (33).

12. Child seat (10) according to either of the preceding Claims 10 and 11, **characterized in that** at least one axial end side (39) of the worm wheel (40) lies axially directly on the at least one securing ring (33) as an axial thrust washer, wherein the at least one securing ring (33) is arranged within the gear housing (32) which is preferably formed from a fibre-reinforced plastic.

13. Child seat (10) according to one of the preceding Claims 2 to 12, **characterized in that** the gear housing (32) is surrounded by a crash cage (34), and a bore (36) is formed within the crash cage (34) or on the crash cage (34) for a first joint pin (38) with which the electric motor (20) is mounted in an articulated manner - preferably on the seat frame (14) .

## Revendications

1. Siège enfant (10), destiné notamment à être fixé sur un siège de véhicule à moteur (11), comportant une coque de siège (12) qui est montée dans un cadre de siège (14) de manière pivotante par rapport à celui-ci pour le réglage de la position assise ou couchée, le mouvement relatif entre la coque de siège (12) et le cadre de siège (14) pouvant être effectué au moyen d'un moteur électrique (20) qui est relié fonctionnellement à une broche de transmission (24) par le biais d'une transmission à broche, et le moteur électrique (20) comprenant un arbre d'induit (21) qui entraîne une vis sans fin (23) qui s'engrène avec une roue hélicoïdale (40) qui est disposée sur la broche de transmission (24), la broche de transmission (24) coopérant avec un élément de déplacement (26) qui déplace la coque de siège (12) par rapport au cadre de siège (14), l'élément de déplacement (26) étant relié directement à la coque de siège (12), et le cadre de siège (14) comprenant une structure de guidage (16) dans laquelle des éléments de guidage (17) de la coque de siège (12) sont guidés, le moteur électrique (20) étant monté de manière articulée dans le cadre de siège (14), et l'élément de déplacement (26) étant réalisé sous forme d'écrou de broche (28) qui est fixé de manière articulée à la coque de siège (12) d'un côté et reçoit la broche de transmission (24) de manière mobile en rotation de l'autre côté.

2. Siège enfant (10) selon la revendication 1, **caractérisé en ce que** la broche de transmission (24) est reliée au moteur électrique (20) par le biais de la transmission à broche (30) réalisée sous forme de transmission à vis sans fin (31), la roue hélicoïdale (40) étant disposée de manière solidaire en rotation sur la broche filetée (24), la broche filetée (24) s'appuyant sur une butée axiale (44) par une extrémité axiale (42) à l'intérieur d'un carter (32) de la transmission à vis sans fin (31).

3. Siège enfant (10) selon la revendication 1 ou 2, **caractérisé en ce que** l'écrou de broche (28) est disposé à l'extrémité (46) d'un tube (48) dans lequel la broche filetée (24) peut être vissée, le tube (48) étant monté, de préférence sur la coque de siège (12), de manière pivotante par le biais d'un deuxième axe d'articulation (50) .

4. Siège enfant (10) selon l'une des revendications précédentes, **caractérisé en ce que** la roue hélicoïdale (40) est disposée par un filetage intérieur de manière rotative sur le filetage de la broche filetée (24) de sorte que la broche filetée (24) puisse être vissée axialement à travers le filetage intérieur de la roue hélicoïdale (40) sans tourner, et une extrémité de la broche filetée (24) est fixée à la coque de siège (12) ou au cadre de siège (14).

5. Siège enfant (10) selon l'une des revendications précédentes, **caractérisé en ce que** la transmission à broche est réalisée sous forme de transmission à vis sans fin double (31), la broche filetée (24) étant orientée approximativement parallèlement à l'arbre d'induit (21) du moteur électrique (20).

6. Siège enfant (10) selon l'une des revendications précédentes, **caractérisé en ce que** le moteur électrique (20) comprend un câble de raccordement (52) qui peut être connecté à l'alimentation en courant électrique (55) du véhicule à moteur, en particulier par le biais d'un allume-cigarettes (54), ou le moteur électrique (20) peut fonctionner au moyen d'un accumulateur rechargeable qui est intégré de préférence dans le cadre de siège (14).

7. Siège enfant (10) selon l'une des revendications précédentes, **caractérisé en ce qu'**un chauffage de siège (60) est disposé au niveau de la coque de siège (12), lequel chauffage peut fonctionner par le biais de l'alimentation en courant (55) du moteur électrique (20).

8. Siège enfant (10) selon l'une des revendications précédentes 2 à 7, **caractérisé en ce que** la coque de siège (12) est déplaçable de manière continue par rapport au cadre de siège (14) et peut être fixée par rapport au cadre de siège (14) de manière sûre dans chaque position par le biais de la transmission à vis sans fin autobloquante (31), des positions préférentielles, par exemple les deux positions finales de l'écrou de broche (28) en tant que position assise ou couchée de la coque de siège (12), pouvant notamment être prédéfinies.

9. Siège enfant (10) selon l'une des revendications précédentes, **caractérisé en ce que** le moteur électrique (20) peut être commandé dans un mode de balancement dans lequel la coque de siège (12) peut être déplacée continuellement suivant un mouvement de va-et-vient entre deux positions de consigne pouvant être prédéfinies.

10. Siège enfant (10) selon l'une des revendications précédentes 2 à 9, **caractérisé en ce que** la broche de transmission (24) est montée de manière résistante aux collisions dans le carter (32) de la transmission à broche (30), la roue hélicoïdale (40) étant montée rotative dans le carter de transmission (32) et au moins une bague de fixation (33) étant disposée dans ou sur le carter de transmission (32), laquelle bague entoure la broche filetée (24) et bague contre laquelle s'appuie axialement la broche de transmission (24) par le biais de la roue hélicoïdale (40) lorsque des forces de collision surviennent, afin de ne pas être arrachée hors du carter de transmission (32), l'au moins une bague de fixation (33) étant de préférence fabriquée à partir de métal.

11. Siège enfant (10) selon la revendication 10, **caractérisé en ce qu'**un profil extérieur (37) est formé à l'intérieur de la roue hélicoïdale (40) sur la broche filetée (24), profil sur lequel la roue hélicoïdale (40) est surmoulée, et de préférence le profil extérieur (37) présente un plus grand diamètre extérieur qu'un diamètre intérieur de l'au moins une bague de fixation (33).

12. Siège enfant (10) selon l'une des revendications précédentes 10 et 11, **caractérisé en ce qu'**au moins un côté frontal axial (39) de la roue hélicoïdale (40) s'appuie axialement directement contre l'au moins une bague de fixation (33) comme rondelle de butée, l'au moins une bague de fixation (33) étant disposée à l'intérieur du carter de transmission (32), lequel est formé de préférence à partir d'une matière synthétique renforcée par des fibres.

13. Siège enfant (10) selon l'une des revendications précédentes 2 à 12, **caractérisé en ce que** le carter de transmission (32) est entouré par une cage anti-collision (34), et un alésage (36) pour un premier axe d'articulation (38) est formé à l'intérieur de la cage anti-collision (34) ou sur la cage anti-collision (34), axe d'articulation à l'aide duquel le moteur électrique (20) est monté de manière articulée, de préférence sur le cadre de siège (14).
